# EUROPÄISCHE PATENTSCHRIFT

(11) **EP 2 503 661 B1**
(45) Veröffentlichungstag und Bekanntmachung des Hinweises auf die Patenterteilung: **18.10.2017**
(21) Anmeldenummer: 12000456.9
(22) Anmeldetag: 26.01.2012
(51) Int. Cl.: H02J 7/00

(54) **Vorrichtung zum aktiven Balancieren von Spannungsquellen**
Device for actively balancing power supply units
Dispositif de balancement actif de sources de tension

(30) Priorität: 24.03.2011 DE 102011014925
(43) Veröffentlichungstag der Anmeldung: 26.09.2012
(73) Patentinhaber: Jungheinrich Aktiengesellschaft, 22047 Hamburg (DE)
(72) Erfinder: Maasland, Hans-Hermann, 25451 Quickborn (DE)
(74) Vertreter: Hauck Patentanwaltspartnerschaft mbB

(56) Entgegenhaltungen:
- DE-A1- 10 151 656
- DE-A1-102008 021 090
- US-A1- 2005 077 879

## Beschreibung

Die vorliegende Erfindung betrifft eine Vorrichtung zum aktiven Balancieren von in Reihe geschalteten Spannungsquellen, insbesondere von Lithium-Ionen-Zellen und von Kondensatoren.

Auf DE 10 2008 021 090 A1 ist eine Schaltungsanordnung zum Austausch elektrischer Ladung zwischen Akkumulatoren einer Akkumulatoranordnung bekannt. Die bekannte Schaltungsanordnung besitzt eine Anzahl von ersten Reihenschaltungen zum Parallelschalten mit jeweils einem Akkumulator, die jeweils ein Schaltelement mit einer Laststrecke und einem Ansteueranschluss sowie ein in Reihe zu der Laststrecke geschaltetes induktives Speicherelement aufweist. Ferner besitzt die bekannte Schaltungsanordnung eine weitere Reihenschaltung zum Parallelschalten mit der Akkumulatoranordnung, die ein Schaltelement mit einer Laststrecke und einem Ansteueranschluss und ein in Reihe zu der Lastrecke des Schaltelements geschaltetes induktives Speicherelement aufweist, wobei das induktive Speicherelement der weiteren Reihenschaltung induktiv mit den induktiven Speicherelementen der ersten Reihenschaltung gekoppelt ist. Eine Ansteuerschaltung ist mit den Steueranschlüssen gekoppelt und ermittelt anhand von gemessenen Akkumulatorspannungen welchem Akkumulator elektrische Energie entnommen und welchem Akkumulator die entnommene Energie zugeführt werden soll.

Aus US 2010/0090649 A1 ist eine Schaltungsanordnung von in Reihe geschalteten Akkumulatoren bekannt geworden, die über einen aktiven Balancierschaltkreis untereinander balanciert werden. Hierbei arbeitet der Balancierschaltkreis als Sperrwandler, bei dem ein gemeinsamer Eisenkern magnetisiert wird und die bereitgestellten Magnetisierungskerne durch die einzelnen Schaltkreise entsprechend ihrem Ladezustand entnommen werden.

Die bekannten Balanciereinheiten erfordern stets eine einzelne Ansteuerung der Schaltelemente in den Schaltkreisen für die in Reihe geschalteten Spannungsquellen, wodurch ein großer steuerungstechnischer Aufwand entsteht.

Aus DE 101 51 656 A1 ist eine Spannungsausgleichsschaltung mit einer Vielzahl von Wicklungen bekannt geworden, die elektromagnetisch miteinander gekoppelt sind. Eine Vielzahl von in Reihe geschalteten Speicherelementen und eine Vielzahl von ersten Schaltelementen werden geschaltet, um jeweils einen geschlossenen Schaltkreis zu bilden. Die bekannte Spannungsausgleichsvorrichtung zeichnet sich dadurch aus, dass eine Referenzspannungswicklung Pₚ vorgesehen ist, die elektromagnetisch mit der Vielzahl von Wicklungen gekoppelt ist.

Der Erfindung liegt die Aufgabe zugrunde, eine Vorrichtung zum aktiven Balancieren von in Reihe geschalteten Spannungsquellen bereitzustellen, bei der durch einen geringen schalt- und messtechnischen Aufwand eine zuverlässige Balancierung der Spannungsquellen erfolgen kann.

Erfindungsgemäß wird die Aufgabe durch eine Vorrichtung mit den Merkmalen aus Anspruch 1 gelöst. Vorteilhafte Ausgestaltungen bilden den Gegenstand der Unteransprüche.

Die erfindungsgemäße Vorrichtung ist vorgesehen und bestimmt zur aktiven Balancierung von in Reihe geschalteten Spannungsquellen, wie beispielsweise in Reihe geschalteten Lithium-Ionen-Zellen oder andere Batterien oder in Reihe geschalteten Kondensatoren. Die Vorrichtung ist gekennzeichnet durch einen Schaltkreis für jede Spannungsquelle, der mit der Spannungsquelle verbunden ist und ein Schaltelement sowie einen induktiven Speicher aufweist. Ferner besitzt die erfindungsgemäße Vorrichtung einen Überträger, der mit jedem induktiven Speicher induktiv gekoppelt ist. Erfindungsgemäß werden die Schaltkreise derart synchron geschaltet, dass elektrische Energie in geschaltetem Zustand aus dem Schaltkreis mit der Spannungsquelle, die die höchste Spannung besitzt, über den induktiven Speicher und den Überträger auf einen oder mehrere Schaltkreise der anderen Spannungsquellen übertragen wird. Ein besonderer Vorteil der erfindungsgemäßen Vorrichtung liegt darin, dass die Schaltkreise der Spannungsquelle synchron geschaltet werden und aufgrund der induktiven Kopplung der Schaltkreise an dem

Überträger elektrische Energie zwischen den Schaltkreisen übertragen wird. Bei der Übertragung der elektrischen Energie zwischen den Schaltkreisen wirkt der induktive Speicher als Primärspeicher, über den elektrische Energie in den Überträger eingetragen wird und der oder die übrigen induktiven Speicher der anderen Schaltkreise als Sekundärspeicher die elektrische Energie aus dem Überträger entnehmen. Indem die Magnetisierung der induktiven Speicher in den einzelnen Schaltkreisen abhängig von der Spannung der zugehörigen Spannungsquelle ist, stellt die erfindungsgemäße Vorrichtung sicher, dass eine Spannungsquelle mit einer hohen Spannung elektrische Energie abgibt und eine oder mehrere Spannungsquellen mit einer niedrigen Spannung zwar ebenfalls ihre induktiven Speicher magnetisieren, jedoch mehr elektrische Energie aufnehmen, um die Spannung der Spannungsquelle zu erhöhen.

Erfindungsgemäß ist eine Entmagnetisierungseinheit vorgesehen, über die die Spannungsquellen der einzelnen Schaltkreise geladen werden können. Hierdurch können die einzelnen Spannungsquellen auch während eines Ladevorgangs untereinander balanciert werden. Ist die Entmagnetisierungseinheit mit der Netzspannung verbunden, wird über den induktiven Ladespeicher als Primärspeicher elektrische Energie an die induktiven Speicher der Schaltkreise transportiert, um die Spannungsquellen zu laden. Auch während dieses Ladevorgangs werden die einzelnen Spannungsquellen untereinander balanciert, da die von den Schaltkreisen der Spannungsquelle aufgenommene elektrische Energie umso größer ist, je kleiner die Spannung der Spannungsquelle ist. In dem Betrieb der Entmagnetisierungseinheit, in dem diese mit der Netzspannung verbunden ist, erfolgt ein Laden der Spannungsquellen.

In einer bevorzugten Ausgestaltung sind die induktiven Speicher jeweils als eine Spule ausgebildet. Als Schaltelement in den Schaltkreisen ist bevorzugt jeweils ein Transistor vorgesehen. Bevorzugt sind die Schaltkreise der einzelnen

Spannungsquellen als Synchrongleichrichter ausgebildet, wobei im geschalteten und im nicht geschalteten Zustand der Strom in die gleiche Richtung fließt.

In einer bevorzugten Ausgestaltung wird der induktive Speicher in dem Schaltkreis entsprechend der Spannung in der Spannungsquelle magnetisiert, wenn das Schaltelement im Schaltkreis geschlossen ist. Wenn das Schaltelement in dem Schaltkreis geöffnet ist, wird entsprechend der Magnetisierung des Überträgers und des induktiven Speichers ein Balancierstrom zu der Spannungsquelle erzeugt. Der Schaltkreis der Spannungsquelle arbeitet somit nach dem Prinzip eines Eintaktdurchflusswandlers, bei dem die Energieübertragung in den Schaltkreis ausschließlich in der Leitphase des Schaltelements erfolgt.

In einer bevorzugten Ausgestaltung ist der Überträger als ein gemeinsamer Spulenkern für die Schaltkreise der Spannungsquellen ausgebildet.

In der bevorzugten Weiterbildung ist eine Entmagnetisierungseinheit vorgesehen, die mit einer Netzspannung verbindbar ist und die einen mit dem Überträger induktiv gekoppelten induktiven Ladespeicher mit jeweils mindestens einem Schaltelement aufweist. Der induktive Ladespeicher wird unabhängig davon, ob die Entmagnetisierungseinheit mit der Netzspannung verbunden ist oder nicht synchron mit den Schaltkreisen der Spannungsquelle geschaltet, um magnetisiert oder entmagnetisiert zu werden.

In einer weiteren bevorzugten Ausgestaltung ist die Entmagnetisierungseinheit mit einem Kondensator ausgestattet, der, wenn die Entmagnetisierungseinheit von der

Eine bevorzugte Ausgestaltung der Erfindung wird nachfolgend anhand der Figuren näher erläutert. Es zeigt:
- Fig. 1: einen Schaltplan für eine Balanciereinheit und
- Fig. 2: einen Schaltplan mit zwei kaskadierten Balanciereinheiten.

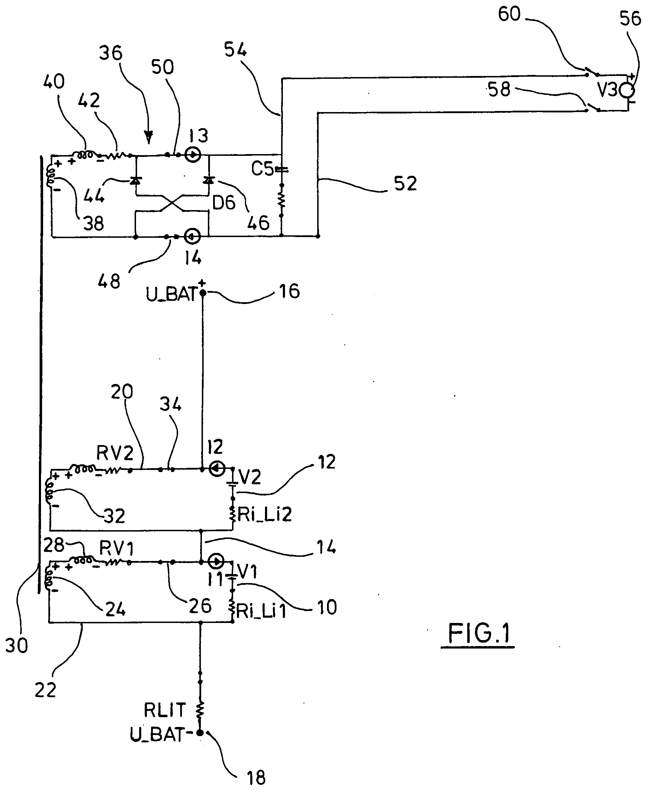

Figur 1 zeigt zwei Lithium-Ionen-Zellen 10, 12, die in ihrem Ersatzschaltbild jeweils als Spannungsquellen V1 und V2 sowie ihren Innenwiderständen Ri_Li1 und Ri_Li2 dargestellt sind. Um die Arbeitsweise der Balanciereinheit besser erklären zu können, sei nachfolgend angenommen, dass V2 größer als V1 ist.

Die Lithium-Ionen-Zellen 10 und 12 sind über eine Leitung 14 elektrisch miteinander verbunden und erzeugen so an den Klemmen 16 und 18 die Batteriespannung U_{BAT}. Jede der Lithium-Zellen 10 und 12 ist mit einem Schaltkreis 20, 22 verbunden. Nachfolgend wird der Schaltkreis 22 der Lithium-Zelle 10 näher beschrieben. Der Schaltkreis besitzt eine Spule 24, die als induktiver Speicher des Schaltkreises dient. Ferner besitzt der Schaltkreis 22 ein Schaltelement 26, das im geschlossenen Zustand dargestellt ist. Ferner ist eine weitere Spule 28 sowie ein Schaltwiderstand RV1 in dem Schaltkreis 22 vorgesehen.

Die als induktiver Speicher dienende Spule 24 ist induktiv mit einem Eisenkern 30 gekoppelt, der als Überträger dient.

Der Schaltkreis der Lithium-Zelle 12 ist entsprechend aufgebaut, wobei die als induktiver Speicher dienende Spule 32 ebenfalls induktiv mit dem Überträger 30 gekoppelt ist. Der Schaltkreis 20 wird über das Schaltelement 34 geschaltet.

Für ein erstes Verständnis der Balanciereinheit genügt es, den vorstehend beschriebenen Teil des Schaltplans zu betrachten. Dass der Überträger 30 noch mit einem Netzteil 36 induktiv gekoppelt ist, kann zunächst unberücksichtigt bleiben.

Im Betrieb werden die Schalter 26 und 34 synchron geöffnet und geschlossen. Die Pulsweiten für die Ansteuerung der Schaltelemente 26 und 34 werden von einer nicht vorgegebenen Steuereinheit bestimmt. Im Leitzustand sind die Schalter 26 und 34 geschlossen.

Wenn der Schalter 26 geschlossen ist, fließt ein Strom durch die Spule 24 über den Überträger 30 in die Spule 32 des Schaltkreises 20. Ebenso fließt ein Strom, jedoch in entgegengesetzter Richtung von der zweiten Lithium-Zelle 12 über die Spule 32 in die Spule 24. Die entgegengesetzt gerichteten Ströme bilden insgesamt einen resultierenden Strom, wobei aufgrund der getroffenen Annahme, dass die Spannung V2 größer als V1 ist, in Schaltkreis 20 der Strom I2 fließt und in Schaltkreis 22 der Strom I1 fließt. Dabei ist der Strom I1 ein Ladestrom für die Lithium-Zelle 10, während der Strom I2 eine Entladung für die Lithium-Zelle 12 bewirkt.

Im Sperrzustand sind die Schalter 26 und 34 geöffnet. Hier kann in den Schaltkreisen 20 und 22 eine zusätzliche Entmagnetisierungswicklung (ni cht dargestellt) vorgesehen sein, um den Magnetisierungsstrom aufzunehmen. Ansonsten kann die Entmagnetisierung auch über die nachfolgend beschriebene Entmagnetisierungseinheit 36 erfolgen.

Die Entmagnetisierungseinheit 36 weist eine Spule 38 auf, die induktiv mit dem Überträger 30 gekoppelt ist und als induktiver Ladespeicher dient. Die Entmagnetisierungseinheit 36 besitzt eine zusätzliche Spule 40 und einen ohmschen Widerstand 42. Zwei Dioden 44 und 46 bilden zusammen mit den Schaltern 48 und 50 eine Brückenschaltung. Die Schalter 48 und 50 sind bevorzugt wieder als Transistoren ausgerührt. Die Transistorbrücke ist über Leitungen 52 und 54 mit einer Netzspannung 56 verbunden, wobei zur Trennung der Netzspannung Schalter 58, 60 vorgesehen sind. In einem Zwischenkreis der Entmagnetisierungseinheit ist ein Zwischenkreiskondensator C5 vorgesehen.

In der Entmagnetisierungseinheit 36 fließt ein Strom in die Spule 38, wenn die Schalter 48 und 50 geschlossen sind und die Entmagnetisierungseinheit über die Schalter 58 und 60 mit der Netzspannung 56 verbunden ist. Werden die Schalter 48 und 50 geöffnet, fließt ein Entmagnetisierungsstrom über die Spule 38 in den Zwischenkreiskondensator C5.

Die Entmagnetisierungseinheit 36 wird mit seinen Transistoren 48 und 50 synchron zu den Transistoren 26 und 34 der Schaltkreise 20 und 22 angesteuert. Hierbei ist es so, dass, wenn die Schalter 58 und 60 geschlossen sind, ein Ladebetrieb über die Entmagnetisierungseinheit 36 erfolgt. Sind die Schalter 58 und 60 geöffnet, erfolgt eine Balancierung zwischen den Lithium-Zellen 10 und 12.

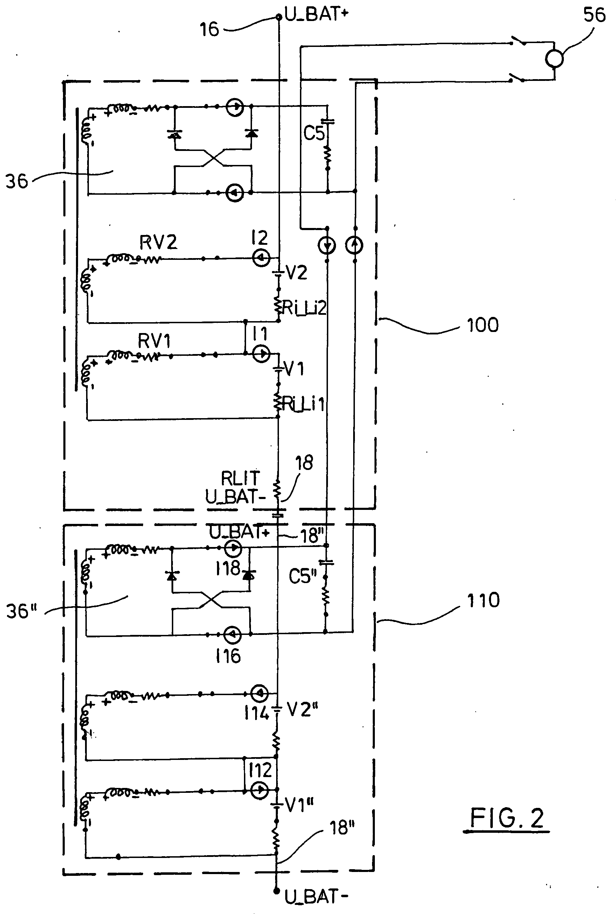

Fig. 2 zeigt zwei Balanciereinheiten 100 und 110, wobei zur besseren Übersicht die gleichen Bezugszeichen wie in Fig. 1 für die Komponenten verwendet werden. Die Entmagnetisierungseinheiten 36 und 36" der Balanciereinheiten 100 bzw. 110 sind parallel zueinander an die externe Netzspannung 56 geschaltet. Die Anschlüsse der Balanciereinheiten 100 und 110 sind bei der in Fig. 2 dargestellten Kaskadierung seriell geschaltet, so dass der Anschluss 18 der Balanciereinheit 100 mit dem Anschluss 16" der Balanciereinheit 110 verbunden ist. Die Gesamtspannung wird an den Anschlüssen 16 und 18" abgegriffen. Grundsätzlich ist es so, dass die Balanciereinheiten 100 und 110 und gegebenenfalls weitere Balanciereinheiten wie Batterien in jeder Form miteinander kombinierbar sind. Bei einer Reihenschaltung der Balanciereinheiten erhöht sich die Gesamtspannung, während sich bei einer Parallelschaltung die Ladung der Spannungsquellen in den Balanciereinheiten erhöht.

Durch die Parallelschaltung der Balanciereinheiten 100 und 110 mit der Spannungsversorgung 56 erfolgt, auch wenn keine Netzspannung anliegt, ein Ladungsausgleich zwischen den Balanciereinheiten 100 und 110. Der Ladungsausgleich erfolgt von der höher geladenen Balanciereinheit zu der geringer geladenen Balanciereinheit, während gleichzeitig die Spannungsquellen V1, V2 und V1" und V2" innerhalb der Balanciereinheiten weiterhin balanciert werden.

## Patentansprüche

1. Vorrichtung zur aktiven Balancierung von in Reihe geschalteten Spannungsquellen (10, 12), insbesondere von Lithium-Ionen-Zellen und von Kondensatoren, umfassend
- einen Schaltkreis (20, 22) für jede Spannungsquelle (10, 12), der mit der Spannungsquelle (10,12) verbunden ist und ein Schaltelement (26, 34) sowie einen induktiven Speicher (24, 32) aufweist,
- einen Überträger (30), der mit dem induktiven Speicher (24, 32) induktiv gekoppelt ist,
- wobei die Schaltkreise (20, 22) synchron geschaltet werden derart, dass elektrische Energie aus dem Schaltkreis (20) mit der Spannungsquelle (12), die eine höchste Spannung (V2) besitzt, über den induktiven Speicher (32) und den Überträger (30) auf die Schaltkreise (22) einer oder mehrerer anderer Spannungsquellen (10) übertragen wird,
- eine Entmagnetisierungseinheit (36), die mit einer Netzspannung verbindbar ist, einen mit dem Überträger induktiv gekoppelten induktiven Ladespeicher (38) sowie mindestens ein Schaltelement (48, 50) und einen Kondensator (C5) aufweist, wobei wenn die Entmagnetisierungseinheit (36) mit der Netzspannung (56) verbunden ist, über den induktiven Ladespeicher (38) als Primärspeicher elektrische Energie an die induktiven Speicher der Schaltkreise transportiert wird, um die Spannungsquellen (10, 12) zu laden
**dadurch gekennzeichnet, dass**
wenn die Entmagnetisierungseinheit von der Netzspannung (56) getrennt ist, der Kondensator (C5) einen Entmagnetisierungsstrom des induktiven Ladespeichers (38) in einer Ausschaltphase der Schaltelemente (26, 34) aufnimmt und in einer Einschaltphase der Schaltelemente (26, 34) die elektrische Energie zurück in den induktiven Ladespeicher (38) speist.

2. Vorrichtung nach Anspruch 1, **dadurch gekennzeichnet, dass** der induktive Speicher (24, 32, 38) als Spule ausgebildet ist.

3. Vorrichtung nach Anspruch 1 oder 2, **dadurch gekennzeichnet, dass** der Schaltkreis (20, 22) einen Transistor (26, 34) als Schaltelement aufweist.

4. Vorrichtung nach einem der Ansprüche 1 bis 3, **dadurch gekennzeichnet, dass** in dem Schaltkreis (20, 22) der Strom im leitenden und nicht leitenden Zustand des Schaltelements in die gleiche Richtung fließt.

5. Vorrichtung nach einem der Ansprüche 1 bis 4, **dadurch gekennzeichnet, dass**, wenn der Schaltkreis (20, 22) geschlossen wird, der induktive Speicher (24, 32) entsprechend der Spannung (V1, V2) der Spannungsquelle (10, 12) magnetisiert wird und, wenn das Schaltelement (26, 34) geöffnet wird, entsprechend der Magnetisierung des Überträgers (30) und des induktiven Speichers (24, 32) einen Balancierstrom (I1) für die Spannungsquelle erzeugt wird.

6. Vorrichtung nach einem der Ansprüche 1 bis 5, **dadurch gekennzeichnet, dass** der Überträger (30) als ein gemeinsamer Spulenkern für die Schaltkreise der Spannungsquellen ausgebildet ist.

7. Vorrichtung nach einem der Ansprüche 1 bis 6, **dadurch gekennzeichnet, dass** der induktive Ladespeicher (38) synchron mit den Schaltkreisen (20, 22) der Spannungsquellen (10, 12) geschaltet wird, um magnetisiert oder entmagnetisiert zu werden.

8. Vorrichtung nach einem der Ansprüche 1 bis 7, **dadurch gekennzeichnet, dass** die Einschalt- und Anschaltphase der Entmagnetisierungseinheit mit den Schaltkreisen (20, 22) gleich getaktet ist.

## Claims

1. A device for actively balancing series-connected power supply units (10, 12), in particular lithium-ion cells and capacitors, comprising
- a switching circuit (20, 22) for each power supply unit (10, 12), which is linked to the power supply unit (10, 12) and has a switching element (26, 34) and an inductive storage element (24, 32),
- a repeater (30), which is inductively coupled with the inductive storage element (24, 32),
- wherein the switching circuits (20, 22) are connected synchronously such that electrical energy is transmitted from the switching circuit (20) with the power supply unit (12), which has the highest voltage (V2), via the inductive storage element (32) and the repeater (30) to the switching circuits (22) of one or more other power supply units (10),
- a demagnetizing unit (36) that can be connected to a power supply, an inductive charge storage element (38) that is inductively coupled with the repeater as well as at least one switching element (48, 50) and a capacitor (C5),
wherein, when the demagnetizing unit (36) is connected to the power supply (56), electrical energy is transported via the inductive charge storage element (38), as the primary storage element, to the inductive storage elements of the switching circuits in order to charge the power supply units (10, 12),
**characterized in that**
when the demagnetizing unit is disconnected from the power supply (56), the capacitor (C5) receives a demagnetization current from the inductive charge storage element (38) when the switching elements (26, 34) are in a deactivation phase, and it feeds electrical energy back into the inductive charge storage element (38) when the switching elements (26, 34) are in an activation phase.

2. The device according to claim 1, **characterized in that** the inductive storage element (24, 32, 38) is configured as a coil.

3. The device according to claim 1 or 2, **characterized in that** the switching circuit (20, 22) has a transistor (26, 34) as a switching element.

4. The device according to one of claims 1 through 3, **characterized in that** the current flows in the same direction in the switching circuit (20, 22) when the switching element is in the conductive and non-conductive states.

5. The device according to one of claims 1 through 4, **characterized in that**, when the switching circuit (20, 22) is closed, the inductive storage element (24, 32) is magnetized in accordance with the voltage (V1, V2) of the power supply unit (10, 12) and, when the switching element (26, 34) is open, a balancing current (I1) is generated for the power supply unit that confirms to the magnetization of the repeater (30) and the inductive storage element (24, 32).

6. The device according to one of claims 1 through 5, **characterized in that** the repeater (30) is configured as a common coil core for the switching circuits of the power supply units.

7. The device according to one of claims 1 through 6, **characterized in that** the inductive charge storage element (38) is connected synchronously with the switching circuits (20, 22) of the power supply units (10, 12) in order to be magnetized or demagnetized.

8. The device according to one of claims 1 through 7, **characterized in that** the activation and deactivation phases of the demagnetizing unit are synchronized with the switching circuits (20, 22).

## Revendications

1. Dispositif de balancement actif de sources de tension (10, 12) raccordées en série, en particulier de cellules lithium-ion et de condensateurs, comportant
- un circuit (20, 22) pour chaque source de tension (10, 12), lequel est relié à la source de tension (10, 12) et présente un élément de commutation (26, 34) ainsi qu'un accumulateur inductif (24, 32),
- un transmetteur (30) couplé de façon inductive à l'accumulateur inductif (24, 32),
- dans lequel les circuits (20, 22) sont commutés de façon synchrone de telle façon que de l'énergie électrique est transmise à partir du circuit (20) avec la source de tension (12) possédant une tension maximale (V2), par le biais de l'accumulateur inductif (32) et du transmetteur (30) aux circuits (22) d'une ou de plusieurs autres sources de tension (10),
- une unité de démagnétisation (36) apte à être reliée à une tension de réseau présente un accumulateur de charge inductif (38) couplé de façon inductive au transmetteur ainsi qu'au moins un élément de commutation (48, 50) et un condensateur (C5),
dans lequel, lorsque l'unité de démagnétisation (36) est reliée à la tension de réseau (56), de l'énergie électrique est transportée vers les accumulateurs inductifs des circuits par le biais de l'accumulateur de charge inductif (38) en tant qu'accumulateur primaire, pour charger les sources de tension (10, 12),
**caractérisé en ce que**
lorsque l'unité de démagnétisation est séparée de la tension de réseau (56), le condensateur (C5) reçoit un courant de démagnétisation de l'accumulateur de charge inductif (38) dans une phase d'arrêt des éléments de commutation (26, 34) et réalimente l'énergie électrique vers l'accumulateur de charge inductif (38) dans une phase d'activation des éléments de commutation (26, 34).

2. Dispositif selon la revendication 1, **caractérisé en ce que** l'accumulateur inductif (24, 32, 38) est conçu comme une bobine.

3. Dispositif selon la revendication 1 ou 2, **caractérisé en ce que** le circuit (20, 22) présente un transistor (26, 34) en tant qu'élément de commutation.

4. Dispositif selon l'une des revendications 1 à 3, **caractérisé en ce que** le courant dans le circuit (20, 22) circule dans la même direction dans l'état conducteur et non conducteur de l'élément de commutation.

5. Dispositif selon l'une des revendications 1 à 4, **caractérisé en ce que** lorsque le circuit (20, 22) est fermé, l'accumulateur inductif (24, 32) est magnétisé conformément à la tension (V1, V2) de la source de tension (10, 12) et, lorsque l'élément de commutation (26, 34) est ouvert, un courant de balancement (I1) est produit pour la source de tension conformément à la magnétisation du transmetteur (30) et de l'accumulateur inductif (24, 32).

6. Dispositif selon l'une des revendications 1 à 5, **caractérisé en ce que** le transmetteur (30) est conçu comme un noyau de bobine commun pour les circuits des sources de tension.

7. Dispositif selon l'une des revendications 1 à 6, **caractérisé en ce que** l'accumulateur de charge inductif (38) est commuté de façon synchrone avec les circuits (20, 22) des sources de tension (10, 12), pour être magnétisé ou démagnétisé.

8. Dispositif selon l'une des revendications 1 à 7, **caractérisé en ce que** la phase d'activation et d'allumage de l'unité de démagnétisation est cadencée en synchronisme avec les circuits (20, 22).
